# EUROPEAN PATENT SPECIFICATION

(11) **EP 1 681 571 B1**
(45) Date of publication and mention of the grant of the patent: **19.05.2010**
(21) Application number: 06111128.2
(22) Date of filing: 15.06.2004
(51) Int. Cl.: G01N 35/10, B01L 3/00

(54) **Apparatus and method for handling fluids for analysis**
Vorrichtung und Verfahren zur Handhabung von Analyseflüssigkeiten
Appareil et procédé de manipulation de fluides pour analyse

(30) Priority: 19.06.2003 US 479710 P
(43) Date of publication of application: 19.07.2006
(62) Divisional of application: 04755308.6
(73) Proprietor: ABBOTT LABORATORIES, Abbott Park IL 60064-3500 (US)
(72) Inventor: LOWREY, Michael, Wildwood, IL 60030 (US); SAFAR, Scott, Burlington, WI 53105 (US); DUNN, Chadwick, M., Barrington, IL 60010 (US); GALITZ, Charles, M., Kenosha, WI 53143 (US); TOTH, Julius, J., Mundelein, IL 60060 (US); KUKLA, Ronald, E., Wheeling, IL 60090 (US); HERCHENBACH, Stephen, Antioch, IL 60002 (US); SHAIN, Eric, B., Glencoe, IL 60022 (US)
(74) Representative: Modiano, Micaela Nadia

(56) References cited:
- EP-A- 1 065 001
- EP-A- 1 441 225
- WO-A-01/70402
- DE-A1- 19 828 995
- US-A- 3 985 649
- US-A- 4 041 995
- US-A- 4 642 220
- US-A- 4 895 650
- US-A- 4 948 564
- US-A- 5 976 369
- US-A1- 2002 137 194
- US-B1- 6 231 760
- US-B1- 6 485 690

## Description

### TECHNICAL FIELD

The present invention is directed toward testing of specimens, and particularly toward an apparatus and method for processing specimens during testing, including adding fluids such as reagents during the processing of specimens.

### BACKGROUND OF THE INVENTION AND TECHNICAL PROBLEMS POSED BY THE PRIOR ART

Testing sample biological specimens is commonly done, for example, to check for the presence of an item of interest, which item may be or include all or portions of a specific region of DNA, RNA, or fragments thereof, complements, peptides, polypeptides, enzymes, prions, proteins, messenger RNA, transfer RNA, mitochondrial RNA or DNA, antibodies, antigens, allergens, parts of biological entities such as cells, virons or the like, surface proteins, or functional equivalents of the above, etc. Specimens such as a patient's body fluids (*e.g.,* serum, whole blood; urine, swabs, plasma, cerebral-spinal fluid, lymph fluids, tissue solids) can be analyzed using a number of different tests to provide information about a patient's health.

In such testing, it is imperative that the specimens be handled in a manner which prevents contaminants from being introduced to the specimens, whether from the outside environment or between specimens. For example, where the HIV virus from one specimen is inadvertently allowed to contaminate the specimen of a different patient, the resulting false positive test result could potentially have catastrophic psychological effect on the patient, even should subsequent testing later discover the error. Moreover, since such testing is highly sensitive, even the smallest amounts of contamination can cause erroneous test results. Simply put, it is imperative that the specimens be properly handled.

In such sophisticated testing, it is also imperative that the various reagents which may be used in the testing be properly handled as well, not only to avoid contaminants but also to ensure that the proper reagent in proper quantities is used at appropriate times.

Commonly, such testing is accomplished using automated devices which handle multiple specimens and fluids (typically, reagents). Such automated devices typically will use sets of pipettes to move various fluids between their original containers (usually receptacles such as open topped tubes) and containers in which the specimens are to be processed. For example, a set of 8 specimens may be contained in 8 tubes or other receptacles loaded in a rack on the device, and a head carrying 8 pipettes will, through programmed motion, move the pipettes into those 8 tubes, where a vacuum will be applied to extract a selected amount of each specimen from its tube into the pipettes. The head will then retract the pipettes from the tubes and move to another set of tubes located at a processing station, depositing the extracted amounts of each specimen from the pipettes into sets of testing tubes.

In such automated devices, racks or trays of multiple tubes are usually moved from one station to the next for different stages of processing. For example, a heating element may be provided at one station, and a magnetic element introducing a magnetic field in the tubes may be provided at another station. Further, in such situations, multiple trays of multiple tubes may be actively processed in series and simultaneously at different stations. However, such processing can result in resource contention, where one rack of tubes is delayed from being placed at a station while another rack of tubes completes its processing at that station when, as is commonly the case, the processing time at one station is different than the processing time at another station. For example, a tray of tubes which have completed processing at one station may be delayed from being processed at the next station until another tray of tubes at that next station has completed its processing there. Like a chain which is no stronger than its weakest link, such an automated device will provide an overall processing time which is a function of the processing time at the slowest station. Of course, a slow overall processing time can reduce the amount of tests which are performed during a given day, and thereby either delay the completion of tests or require significant additional investment of capital for additional devices to allow for a desired testing capacity level.

At the processing stations of such automated devices, the specimens are variously handled according to the purpose of the testing (e.g., incubated, prepared, lysed, eluted, etc.). For example, the specimens may be prepared for analyzing, as for example by separating DNA or RNA from the specimen. The specimens may also or alternatively be analyzed. Commonly, such processes involve the addition of various fluids (typically reagents) to the specimen in each tube. For example, in a first step, a reagent may be added to each of the tubes to wash the specimens, and second and third (and more) reagents may be added to the specimens in the course of carrying out other processes to, for example, unbind and/or separate the DNA or RNA of interest so that it may be extracted from the specimen in each tube for subsequent testing. Similar processes, in which the same or different reagents are added to and/or extracted from the tubes, may also occur after the specimen has been prepared as part of analyzing the prepared specimens.

In some processes, magnetic fields have been used to assist in separating analytes of interest from the fluid in the tubes. For example, analytes of interest have been bound to magnetic particles within a reagent and a magnetic field applied to pull the particles and bound analyte to one side of the tube, whereby the reagent may be drawn out of the tube to leave a concentration of the analyte therein. Where it has been necessary to adjust the magnetic field within the tubes (e.g., in order to change the location where the analytes are to be drawn), the tubes have been moved in order to accomplish the desired orientation of the magnetic field in the tubes.

The handling of the reagents and other fluids with automated devices such as described above can be problematic. Though the reagents may be automatically moved from receptacles to the specimen containing tubes in the processing station by use of the head and pipettes such as noted, it is in the first instance necessary to load the appropriate reagent into the appropriate receptacle on the device in order to ensure that the head and pipettes are adding the appropriate reagent to the appropriate specimen containing tube at the appropriate time in the process. Further, it should be recognized that it is necessary for the receptacles to be readily cleaned, whether to remove possible contaminants or to permit use of different fluids in connection with different processes. As a result of such requirements, the receptacles are typically readily removable from the apparatus for such action.

Heretofore, loading the appropriate reagent into the appropriate receptacle has been accomplished in several different ways. In one such procedure, the individual who is controlling the device manually measures and adds the reagents to receptacles, and then places those receptacles on the device. In another such procedure, the loading of reagents is automatically accomplished by the device itself, which uses some transfer apparatus (such as a head and pipette(s) as previously described) to move the reagents from bulk supplies of the reagents provided with the device.

Removing reagents from tubes is similarly accomplished, such as by use of a head which positions pipettes in the tube and vacuum draws the fluid from the tubes into the pipettes. Such a process can be time consuming, and tie up the head from other uses, particularly if prevention of contamination between tubes makes it necessary to use a new pipette with each tube. In such cases, it may be necessary to repetitively move the head to discharge, discard and pick up new pipettes every time fluid is drawn from tubes (*e.g*., a head carrying eight pipettes may have to be cycled six times when used with a tray of 48 tubes, where each cycle requires discharging and discarding used pipettes, and picking up new pipettes). Of course, in such situations, multiple pipettes will be consumed at some cost. U.S. Patent No. 6,117,398 alternatively discloses drawing fluid from the bottom of a sample vessel, wherein a valve is situated between every sample processing vessel and the waste container.

The present invention is directed to overcoming one or more of the problems as set forth above.

WO 01/70402 discloses a method for processing at least one substance in a vessel capable of retaining at least one substance and having an aperture at the bottom that can be sized such that the surface tension of the fluid within the aperture is sufficient to prevent leakage through the aperture. Vacuum can be applied when fluid is drawn from the vessel through the aperture. More vessels can be supported in a support.

US 4 948 564 discloses a filter strip and composite assemblies for filtering microliter quantities of fluids. A linear array of wells having open top and bottom ends are connected by frangible webs in spaced-apart relation with discrete filter membranes closing the bottom ends of each well. Tabs are provided on the ends of the filter strip for holding the same and supporting the strip in a rectangular holder. The filter strip may be used in a vacuum manifold for applying a pressure differential across the filter membrane and directing the filtrate into an aligned aperture of a closed bottom well of an array of wells held within the manifold, or with a transfer plate for directing the filtrate from each well of the filter strip to an aligned well of a closed bottom array of wells. Another composite assembly includes a pressure manifold for applying an increased pressure above the membranes,

DE 198 28 995 discloses a micro-reaction vessel, with at least one filling opening and a reaction chamber , having at least one outlet opening formed by an external force and/or local heating, as well as an assembly of several such vessels in a row or lines or columns, specifically in an arrangement similar to a conventional microtitre plate and a method for discharging liquid from a micro-reaction vessel (or assembly of such vessels), using at least one outlet opening formed by an external force and/or local heating.

US 2002/137194 A1 discloses an automated analyzer for performing multiple diagnostic assays simultaneously, in which discrete aspects of the assay are performed on fluid samples contained in reaction receptacles and a method for performing an automated diagnostic assay including an automated process for isolating and amplifying a target analyte. The process is performed by automatically moving each of a plurality of reaction receptacles containing a solid support material and a fluid sample between stations for incubating the contents of the reaction receptacle and for separating the target analyte bound to the solid support from the fluid sample.

US 6 231 760 discloses an apparatus for carrying out the affinity separation of a target substance from a liquid test medium by mixing magnetic particles having surface immobilized ligand or receptor within the test medium to promote an affinity binding reaction between the ligand and the target substance. The test medium with the magnetic particles in a suitable container is removably mounted in an apparatus that creates a magnetic field gradient in the test medium. This magnetic gradient is used to induce the magnetic particles to move, thereby effecting mixing.

US 3 985 649 discloses a method of carrying out a solid phase chemical reaction or a filtration step to remove a solid from a liquid utilizing ferromagnetic particles. The process involves the addition of the ferromagnetic particles to a potentially reactive fluid. After the fluid has reacted either as a result of contact with the biologically active material or by a process causing a precipitate in the fluid, the particles may be separated from the fluid by bringing the particles into close proximity with a magnet such as an electromagnet. When sufficient particles are held in an elongated container and a magnetic force is exerted to hold the particles in a porous mass across the container, the particles may be moved through the liquid to filter solid particles from the liquid.

### SUMMARY OF THE INVENTION

In one aspect of the present invention, a processing zone for a specimen handling device is provided as defined in claim 1, including a support for a plurality of reaction vessels having drain openings in their bottoms, passages adapted to communicate with the bottom drain openings of supported reaction vessels, and a source of air at non-atmospheric pressure adapted to selectively drain fluid through the drain openings in supported reaction vessels. The drain openings are adapted to support a selected head of fluid in the vessels.

The support is adapted to support the plurality of reaction vessels in at least two rows, each row having a defined space from at least one adj acent row. The defined space between rows is a generally vertical longitudinal slot, and a bar magnet extends generally horizontally and is supported for selected vertical movement in the slot.

In one form of this aspect of the invention, the source of air at non-atmospheric pressure is a vacuum source for drawing a vacuum in the passages.

In another form of this aspect of the invention, a heater is provided for heating reaction vessels supported in the processing zone.

In still another form, the reaction vessels are adapted to selectively contain fluids having a surface tension sufficient to support a selected head of fluid without the fluid draining through the drain openings, and the source of air at non-atmospheric pressure is adapted to selectively create a relatively lower pressure at the drain opening than at the top of the fluid to overcome the fluid surface tension and selectively drain the fluid through the drain openings.

In a still further form, the support is adapted to support the plurality of reaction vessels in at least four rows and the defined space is a generally vertical longitudinal first slot between the first and second rows and a generally vertical longitudinal second slot between the third and fourth rows, with the bar magnet being a first bar magnet supported for selected vertical movement in the first slot and a second bar magnet supported for selected vertical movement in the second slot. In a yet further form, the first and second bar magnets are supported for vertical movement together.

In still another aspect of the present invention, a method of processing analytes in fluids in reaction vessels is provided, including the steps of (1) supporting a reaction vessel containing an analyte in a fluid, the reaction vessel having a drain opening in its bottom capable of supporting a selected head of the fluid in the vessel by the surface tension of the fluid, (2) drawing the analyte to a side of the vessel to concentrate the analyte clear of the drain opening, and (3) selectively creating a pressure differential between the top of the fluid and the bottom of the drain opening sufficient to overcome the fluid surface tension and drain the fluid through the drain opening.

The drawing step includes binding the analyte to a magnetic particle, and introducing a magnetic field into the vessel which draws the magnetic particle and bound analyte to the side of the vessel.

In one form of this aspect of the invention, the selectively creating a pressure differential step includes selectively creating a vacuum beneath the drain opening.

In a further form, the magnetic field is moved vertically along the height of the reaction vessel to draw the magnetic particles and bound analyte together into a pellet in the reaction vessel. In a still further form, the moving step moves the magnetic field down from an upper position near the top of the fluid in the reaction vessel to a position near the bottom of the reaction vessel whereby the pellet is formed near a bottom side of the reaction vessel.

### BRIEF DESCRIPTION OF THE DRAWINGS

Figure 1 is a perspective view of a processing zone and one reaction vessel according to various aspects of the present invention;
Figures 2a, 2b, and 2c are cross-sectional views of a processing zone supporting a plurality of reaction vessels illustrating the magnets in different positions according to one aspect of the present invention;
Figure 3a is a perspective, cross sectional view of a processing zone which includes the present invention;
Figure 3b is an enlarged cross-sectional partial view showing two reaction vessels supported in the processing zone;
Figure 4a is a cross-sectional view of a reaction vessel suitable to be supported in the processing zone of the present invention;
Figures 4b, 4c, 4d, and 4e are enlarged cross-sectional partial views of different reaction vessels suitable to be supported in the processing zone of the present invention;
Figure 4f is an enlarged cross-sectional partial view of a reaction vessel used with a passive valve suitable to be supported in the processing zone of the present invention;
Figure 4g is an enlarged cross-sectional partial view of a reaction vessel used with an active valve suitable to be supported in the processing zone of the present invention;
Figure 5 is a graph showing the theoretical head or height of a particular fluid which will be retained based on the diameter of the fluid bead at the drain opening;
Figure 6 is a graph illustrating test results of the head or height of a particular fluid which will be retained in a reaction vessel having different hole diameters;
Figure 7 is a graph illustrating the predicted time required to evacuate a 3,5 mL sample through different drain openings; and
Figure 8 is a diagram of a fluid handling mechanism according to an aspect of the present invention.

### DETAILED DESCRIPTION OF THE INVENTION

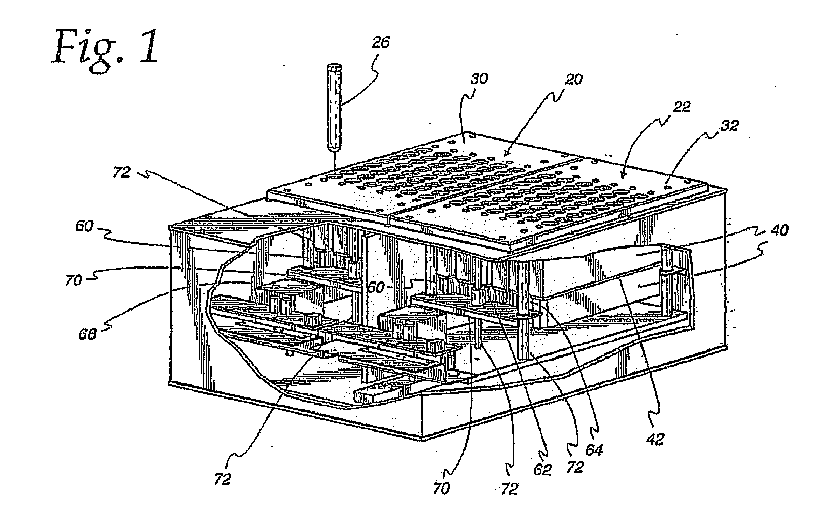

Two processing zones 20, 22 in accordance with the present invention and usable with a suitable automated testing device (not shown) are illustrated in Fig. 1. For simplicity of explanation of the invention, the overall testing device is not (and need not be) shown in the figures. For example, a suitable automatic testing device may be adapted for the substantial isolation of nucleic acids from biological samples, including the isolation and testing of nucleic acids from biological samples.

In a suitable automated testing device for such a use, for example, a hood may be provided to protect against contamination from the environment in which the zones 20, 22 are located to prevent outside contaminants from entering therein as is known in the art. Such an automatic testing device may advantageously also include one or more of the following features: (1) a receptacle to hold and segregate from samples and reagents used pipette tips such that contamination from used tips is minimized, (2) aerosol control devices, for example without limitation, (a) a sample tube or reagent tube sealer, (b) electrodes for treating surfaces and/or liquids with electrical current capable of modifying nucleic acids, (c) an ultraviolet light source capable of degrading or modifying nucleic acids, (d) an apparatus for causing laminar air flow in or around the automatic testing device, and (3) an optical detector *(e.g.,* a flourometer) for measuring the light absorbance or fluorescence of processed samples. Tecan AG manufactures a general purpose laboratory pipetting instrument with which the various described aspects of the invention may be used. However, it should be understood that many features of such instruments, though usable with the present invention, do not form a part of the invention, and therefore are not shown in the figures. Those skilled in the art who obtain an understanding of the present invention will recognize such features, such as disclosed in, for example, in U.S. Serial No. 10/360,956 titled "Apparatus and Method for Handling Fluids for Analysis", filed February 7, 2003, U.S. Patent No. 6,413,780, titled "Structure and Method for Performing a Determination of an Item of Interest in a Sample", and U.S. Publication No. 2002-0127727 also titled "Structure and Method for Performing a Determination of an Item of Interest in a Sample".

Further, a plurality of processing zones may be used with a single testing device such as shown, including not only multiple processing zones 20, 22 embodying aspects of the present invention such as shown in Fig. 1, but also additional processing zones (not shown) for different types of processing or specimen handling. For example, additional handling zones can be provided wherein reaction vessels may be prepared prior to desired processing by adding specimens, etc. The multiple processing zones 20, 22 illustrated in Fig. 1 assist in minimizing resource contention *(i.e.,* conflicts arising where processing using one group of reaction vessels may be delayed until another group of reaction vessels has completed processing at the next required processing zone 20.

Fig. 1 generally illustrates a processing zone 20 at which testing of specimen samples may be done. In suitable testing devices with which the processing zones 20, 22 as discussed herein may be used, reaction vessels 26 (only one of which is shown in Fig. 1) containing specimens for testing may be loaded onto supports 30, 32 at each zone 20, 22. The supports 30, 32 may be support brackets or racks, for example, defining rows in which reaction vessels 26 may be supported, each with an upwardly open top. The supports 30, 32 may serve as heat shields to protect a user from heat blocks therebeneath (as described below). Suitable movable carriers may also be used which are transportable to and from the processing zones 20, 22 (*e.g*., manually or by a suitable robotic arm) to facilitate handling reaction vessels where desired.

The supports 30, 32 illustrated in Fig. 1 will support reaction vessels 26 in a repeating pattern, with a pattern consisting of a row of eight reaction vessels 26 repeated six times, whereby a total of forty-eight reaction vessels 26, may be processed simultaneously at one processing zone 20 or 22. Thus, in the present description, the processing may be to isolate analytes of interest from up to forty-eight specimens (*e.g*., DNA or RNA), after which processing the isolated analyte may be further tested according to an appropriate protocol. However, it should be understood that the present invention is not limited in any way to such processing, and could as readily be used with a device in which different processing or protocol are carried out

In the illustrated embodiment, each of the processing zones 20, 22 includes heat blocks 40 which may be suitably controlled to heat the reaction vessels 26 to whatever temperatures, for whatever periods of time, is required by the processing or protocol being carried out. The heat blocks 40 may be configured so as to surround the reaction vessels 26 to dissipate heat from a suitable heater 42 evenly throughout the reaction vessels 26 in the processing zone 20, 22,

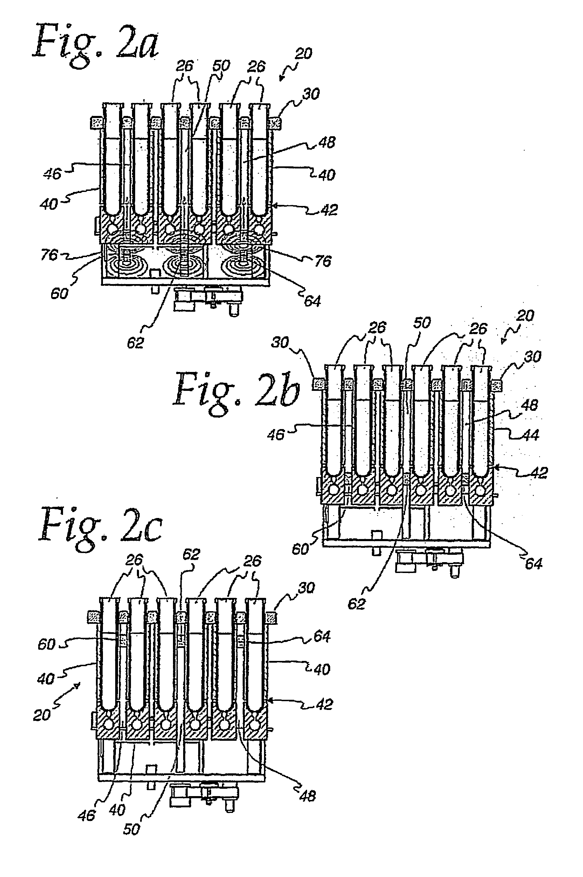

The heat blocks 40 may also be arranged with a longitudinal, vertical slot between adjacent rows of reaction vessels 26. For example, as illustrated in Figs. 2a-2c, there is a slot 46 between the left two rows of vessels 26, a slot 48 between the right two rows of vessels 26, and a slot 50 between the middle two rows of vessels 26.

Suitable bar magnets 60, 62, 64 are supported for movement in the slots 46, 48, 50 between the rows of reaction vessels 26. The bar magnets 60, 62, 64 are suitably supported for selected vertical movement together in the slots 46, 48, 50, as by a controlled drive 68 which moves a cross-support 70 on vertical guide rods 72. It would, however, be within the scope of this aspect of the present invention to use any structure which would suitably control vertical movement of the bar magnets 60, 62, 64 as described hereafter so as to move the magnetic field 76 (see Fig. 2a) in the reaction vessels 26. Moreover, it would be within the scope of the present invention to use still other suitable magnets, such as electromagnets.

Specifically, during processing of a specimen within the reaction vessel 26, the analyte of interest dispersed in the reaction vessel 26 may be suitably bound to a magnetic material or particles in a suitable manner such as is known in the art. During processing thereafter, the magnets 60, 62, 64 may be selectively moved vertically in the slots 46, 48, 50 to draw the magnetic particles (and bound analyte of interest) to one side of the vessel 26. Morever, by selectively moving the magnets 60, 62, 64 along the side of the vessels 26 in the slots, the magnetic particles and bound analyte of interest within the reaction vessel 26 may be strongly drawn to the side of the vessels 26 throughout the height of the vessel 26 by essentially subjecting the vessel contents to a uniform magnetic force throughout its height. Further, by moving the magnets 60, 62, 64 from an upper (lyse capture) position such as illustrated in Fig. 2c to a bottom (wash capture) position as illustrated in Fig. 2b, magnetic particles and bound analyte of interest may not only be drawn to the side of the vessels 26 but may also then be pulled down along the side of the vessels 26 as the magnets 60, 62, 64 move down whereby a desired pellet of such materials is formed at the bottom corner of the vessels 26.

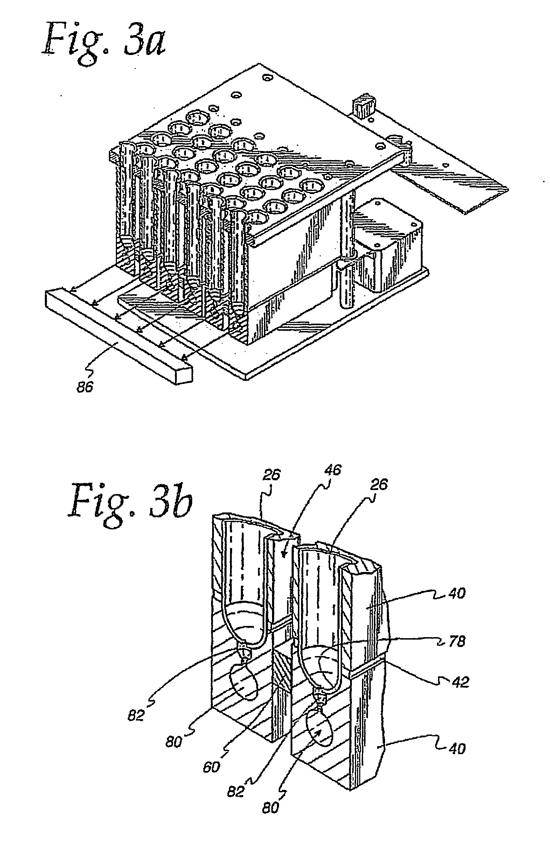

Figs. 3a-3b illustrate yet another aspect of the present invention. Specifically, each processing zone 20, 22 may include concave recesses 78 (see Fig. 3b) for receiving the bottoms of the reaction vessels 26, for example, in the heat blocks 40. A horizontal drain passageway or channel 80 may extend along the length of the heat blocks 40 beneath each row of vessels 26, with a vertical passageway 82 connecting the horizontal passageway 80. A suitable vacuum source (indicated schematically at 86 in Fig. 3a) may be applied to the passageways 80, 82 to selectively draw/drain fluid from the vessels 26 as described below. While a vacuum source 86 is described herein, it should be understood that the significant feature is a lower pressure beneath discharge or drain openings in the bottom of the vessels 26 (as described in detail below) relative to the pressure on the fluid at the top of the vessels 26. Therefore, it should be understood that this aspect of the invention could also be accomplished through the application, for example, of high pressure to the top of the reaction vessels 26 where the passageways 80, 82 are at atmospheric pressure, or a combination of pressure and vacuum.

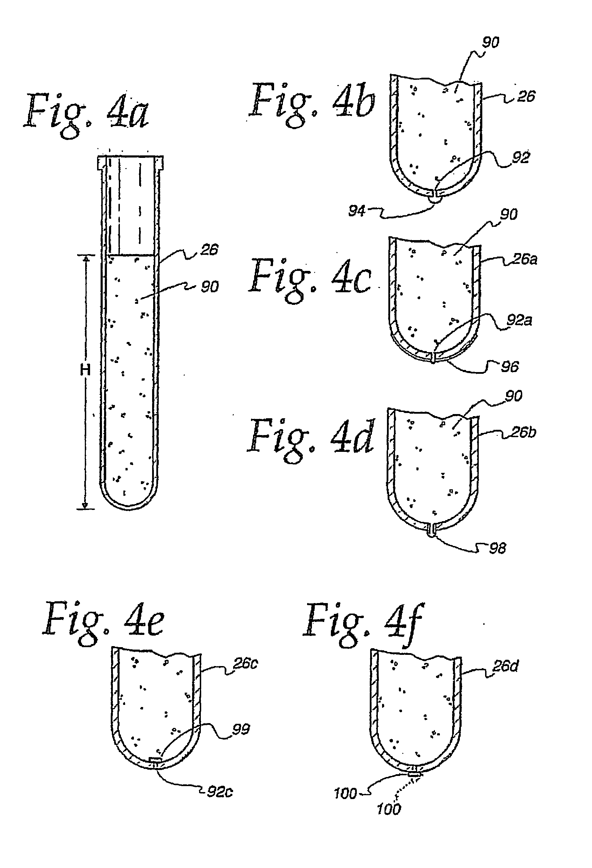

Specifically, as illustrated in Fig. 4a, it is contemplated as an example that a reaction vessel 26 may be provided with a fluid 90 and sample having a depth (or height or head) H.

A discharge or drain opening 92 is provided in the bottom of the reaction vessel 26, where the drain opening 92 is configured so that the surface tension of the fluid 90 in its condition at the processing zone 20, 22 is sufficient to support the height of fluid without the fluid draining through the drain opening 92. It should be understood that, while a single opening 92 is shown in Fig. 4a, it would advantageously be within the scope of the present invention to define the drain opening via multiple openings through the bottom of the vessel 26.

Fig. 4b illustrates a reaction vessel 26 with one configuration of drain opening 92, where fluid 90 has passed through the drain opening 92 so as to form a bead 94 around the opening 92. So long as the opening 92 is small enough to maintain a bead 94 which is no greater in size than the surface tension of the fluid 90 can maintain, the fluid 90 will be supported in the vessel 26 (that is, until an additional force, a relative pressure between the top and bottom of the fluid 90, is selectively created by the introduction of a vacuum in the passageways 80, 82 beneath the vessels 26).

Fig. 4c discloses a reaction vessel 26a suitable to be supported in the processing zone of the present invention, wherein a suitable non-wettable coating or surface 96 is provided around the drain opening 92a.

Such a non-wettable coating 96 will prevent a bead from spreading out onto the coating (Fig. 4b illustrates a bead 94 which spreads out onto the outer surface of the vessel 26), such that a larger size drain opening 92a may be used while still maintaining the ability of the surface tension of the fluid 90 to support a desired height of fluid 90 in the vessel 26a.

Fig. 4d discloses still another reaction vessel 26b suitable to be supported in the processing zone of the present invention, wherein a protruding tube or flange 98 is provided around the drain opening 92b.

The flange 98 may also prevent the bead from spreading out to an area much larger than the flange 98, thereby allowing use of a larger drain opening 92b while still maintaining the ability of the surface tension of the fluid 90 to support the fluid 90 as described for Fig. 4c.

Fig. 4e discloses yet another reaction vessel 26c suitable to be supported in the processing zone of the present invention, in which a hydrophobic frit 99 or other suitable hydrophobic porous material (such as may be obtained from Porex Corporation of Fairburn Georgia) is associated with the vessel 26c to define the drain opening 92c. The hydrophobic frit 99 may be advantageously selected, based on the fluid, whereby the frit 99 will support the desired height of fluid 90 in vessel 26c, and will allow the fluid to pass therethrough when a selected pressure differential is introduced between the top of the vessel 26c and beneath the frit 99/drain opening 92c. Thus, where a fluid having low surface tension properties is used (*e.g*., alcohol), the porosity of the frit material may advantageously be less than the material used with fluids having higher surface tension properties to enable the desired height of fluid to be supported as desired.

The above described vessels 26, 26a, 26b, 26c are particularly advantageous inasmuch as such vessels are low cost disposables, However, it should be understood that still further vessels can be used having drain openings which will support a head of fluid 90 by other than the fluid surface tension, while allowing that fluid to be selectively drained from the vessel responsive to a selected pressure differential created *(e.g.,* by the introduction of a vacuum in the passageways 80, 82 beneath the vessels 26).

For example, a drain opening consisting of not only an opening in the vessel 26 but also a suitable passive valve may be provided to provide the desired fluid flow, where the passive valve is biased to block fluid flow unless a selected pressure differential across the valve is created. Fig. 4f illustrates a reaction vessel 26d having a duckbill valve 100 as one example of a suitable valve which would be pulled open by a selected pressure differential resulting from a vacuum in the passageways 80, 82. Those skilled in the art will recognize that many other valve structures providing such operation would be suitable, including, for example, umbrella valves, flapper valves and spring biased ball check valves, and could also be advantageously used with certain aspects of the present invention.

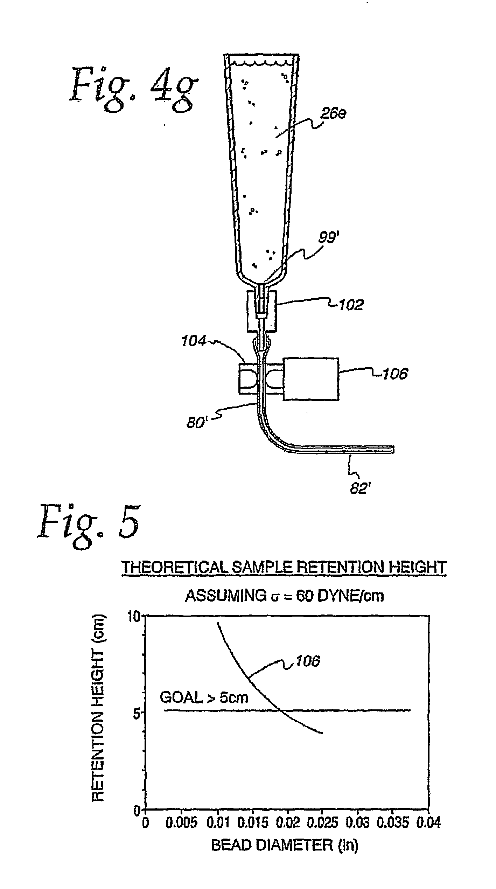

Active valves may also be advantageously used with certain aspects of the present invention. Fig. 4g illustrates a reaction vessel 26e with a suitable connection 102 to passageways 80', 82' with a suitable pinch valve 104 and suitable control 106 for selectively closing and opening the passageway 80' as desired for operation. A hydrophobic frit 99' may also be provided in the bottom opening of the vessel 26e. Active valves may advantageously be selected which will support the desired height of fluid and may be opened to allow fluid to drain from the vessel 26e without assist by a pressure differential. However, it would be within the scope of certain aspects of the present invention to additionally provide a vacuum to assist in such draining when the active valves 104 are open.

Valves such as described above may be a part of the reaction vessel, or part of the vacuum passageways 80, 82 beneath the vessel.

Fig. 5 illustrates a theoretical retention height H of the following fluid 90, such as may be commonly encountered as one example:

| Vessel Content | 1 mL Plasma + 2.5 mL Buffer Solution |
|---|---|
| Sample height | 5 cm |
| Temperature | 50 degrees C |
| Sample density ρ | 1 g/cc |
| Sample surface tension σ | 60 dyne/cm (est. at 50 degrees C) |
| Sample viscosity µ | 0.87 cP (est. at 50 degrees C) |

As can be seen from the curve 106 in Fig. 5, for such a fluid, the 60 dyne/cm surface tension would be sufficient to support a height H of fluid of 5 cm if the bead diameter is slightly less than 0.02 inches (or smaller). Thus, any drain opening 92 which will form a bead diameter no larger than slightly less than 0.02 inches will be able to retain the fluid 90 in the reaction vessel 26 until a relative pressure is introduced via the vacuum 86.

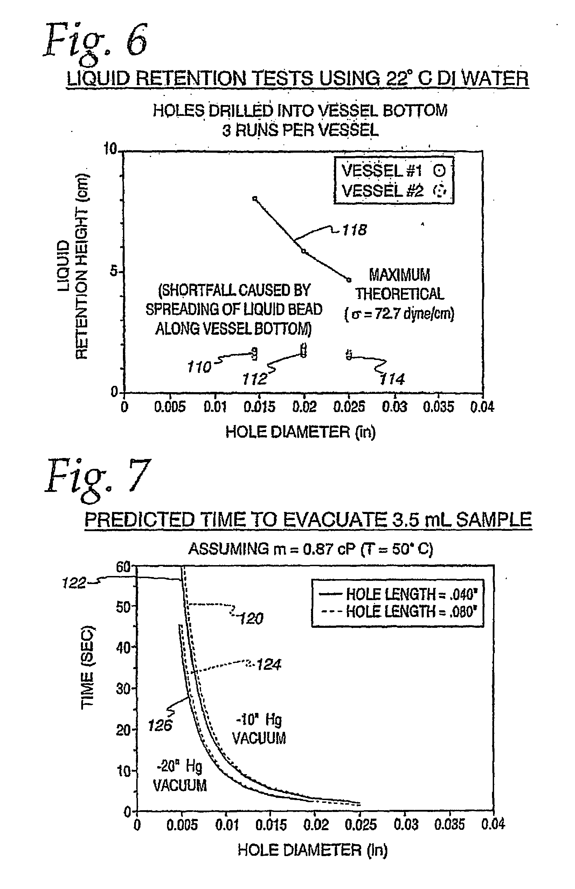

As illustrated in Figs. 4b and 6, however, the drain opening 92 as in Fig. 4b may not be as large as the allowable bead size inasmuch as the bead may tend to spread out around the opening 92. Fig. 6 shows the results 110, 112, 114 of tests using DI water at 22 degrees C (with a surface tension σ of 72.7 dyne/cm), in which it can be seen that the actual height of supported liquid 90 (generally around 1 to 2 cm) for a given hole diameter was far below the maximum theoretical liquid retention height 118 for a bead of such water having that same diameter. Such a shortfall can be attributed in large part to the spreading of the bead (see 94 in Fig. 4b) around the opening 92. As previously discussed, the Figs. 4c and 4d embodiments address this issue by limiting the spreading of the bead around the opening 92a, 92b.

Fig. 7 illustrates the predicted time to evacuate a 3.5 mL sample *(e.g.,* a 5 cm fluid height from a conventional reaction vessel 26) based on the hole diameter. Different theoretical conditions are illustrated using the Fig. 5 sample fluid (having a fluid viscosity µ of 0.87 cP at a temperature of 50 degrees C). Hole lengths of 0.040 inch and 0.080 inch, and vacuum of -10 inches Hg and -20 inches Hg, are illustrated. Specifically, the theoretical evacuation time for a hole length of 0.080 inch using a -10 inch Hg vacuum is shown at 120, the theoretical evacuation time for a hole length of 0.040 inch using a -10 inch Hg vacuum is shown at 122, the theoretical evacuation time for a hole length of 0.080 inch using a -20 inch Hg vacuum is shown at 124, and the theoretical evacuation time for a hole length of 0.040 inch using a -20 inch Hg vacuum is shown at 126.

As can be seen from the Fig. 7 curves 120, 122, 124, 126, the hole length has a theoretical minor impact on the predicted evacuation time. The amount of vacuum assist has a greater impact on the time, but that is still relatively small. Of particular significance is the indication that hole diameters which are about 0.01 inch or smaller will have significantly greater evacuation times, with holes much smaller than about 0.005 inch theoretically incapable of evacuating the fluid with the indicated vacuum levels. Since evacuation time could thus potentially significantly slow processing of samples, it should be appreciated that the larger hole diameters above 0.01 inch would provide advantageous speeding of processing over smaller hole diameters. Thus, the Figs. 4c and 4d embodiments, for example, which will enable the reaction vessels 26a, 26b to retain the desired height of fluid 90 with larger size drain openings 92a, 92b such as previously described, may be particularly advantageously used with the present invention.

This manner of draining fluid 90 from the reaction vessels 26 should thus be appreciated to be fast and convenient. Further, it should be appreciated that such draining may be accomplished with minimal cost of disposable pipettes. Moreover, it should be appreciated that the use of reaction vessels 26 with bottom drain openings 92 such as described may be advantageously used with the previously described movable magnets 60, 62, 64, inasmuch as the magnets 60, 62, 64 operate to pull the magnetic particles and bound analyte of interest to the bottom side of the vessel 26, whereby the pellet of such material will be clear of the drain opening 92.

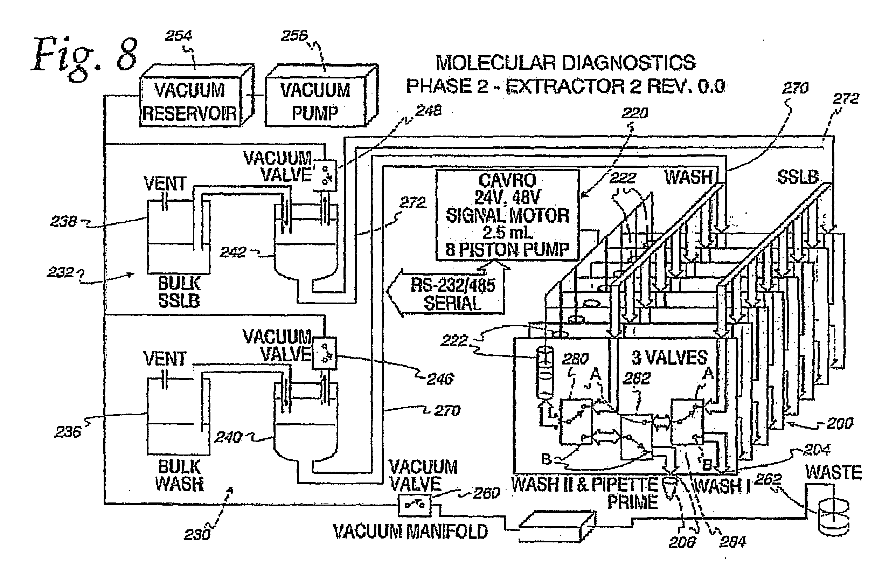

Fig. 8 discloses a traveling head 200 connected to bulk supplies of fluid, whereby desired amounts of such fluids may be added to sets of vessels 26 (not shown in Fig. 8).

Specifically, the head 200 includes two sets of outlets 204, 206, with one outlet set 204, for example, used for wash, and a second outlet set 206 used for wash and pipette prime. A second (or additional) outlet set 206 may be provided, for example, where a different type of discharge (*e.g*., a spray nozzle) may be desired. In the illustrated embodiment, the outlet sets 204, 206 include eight outsets arranged in a row to match the pattern of the vessels 26 supported in the processing zones 20, 22. Thus, the head 200 may be arranged above any selected pattern row of eight vessels 26 in a processing zone 20, 22 whereby the eight outlets of a selected set 204, 206 will be aligned above the selected eight vessels 26 so that fluid discharged from the head outlets will enter the selected vessels 26.

Associated with the head 200 is a suitable pump 220 which may meter desired amounts of selected fluids (as further described below) for each of the outlets in a set 204, 206. One such suitable metering pump 220 is illustrated in Fig. 8 as a Cavro 24V, 48V signal motor which includes eight 2.5 mL piston pumps 222. Cavro Scientific Instruments Inc. is located at 2450 Zanker Road, San Jose, California, USA 95131. As described further herein, this pump 220 will meter a desired amount (*e.g.*, 2.5 mL) of fluid from the bulk supplies for each of the X number (eight in the illustrated embodiment) outlets of each outlet set 204, 206. However, it should be understood that the details of this pump 220 do not form a part of the invention, and any pump and valving system which will meter a selected number (X, *e.g.,* eight) of a selected quantity (*e.g*., 2.5 mL) of fluid for discharge through the outlets of a selected outlet set 204, 206 would be suitable.

Suitable bulk supplies 230, 232 may be provided according to the expected needs of the testing. In the illustrated example, there is a bulk supply 230 of wash and a bulk supply 230 of single step lysis buffer (SSLB). As illustrated in Fig. 8, each bulk supply 230, 232 may include a refillable tank 236, 238 which is connected to a sealed dispensing tank 240, 242. A valve 246, 248 may selectively connect the dispensing tank 240, 242 to a vacuum source (vacuum reservoir 254 and vacuum pump 256) to assist in maintaining a desired level of fluid in the dispensing tank 236, 238, and to permit fluid to be drawn off the top of the dispensing tanks 240, 242 if desired. Another vacuum valve 260 may be used to selectively draw such materials to a waste container 262. It should be understood, however, that the illustrated bulk supply structure is merely one suitable example of a structure which may be used with this aspect of the invention, and any suitable bulk supply from which the needed fluids may be pumped by the metering pump 220 may be used with this aspect of the present invention.

The dispensing tanks 236, 238 are suitably connected to the traveling head 200, as by flexible hoses 270, 272.

A suitable valve structure is provided to enable the metering pump 220 to be selectively connected to the bulk supply of selected fluid in order to obtain X *(e.g.,* eight) units of selected quantity (*e.g*., 2.5 mL), after which the X units of selected fluid may be sent to a selected set of outlets 204, 206 for discharge into a selected set of reaction vessels 26 over which the head 200 has positioned the selected outlet set 204, 206.

One valve structure which would be suitable for a head 200 connected to two bulk supplies 236, 238 and having two outlet sets 204, 206 is the three-valve structure illustrated in Fig. 8. One such valve structure is associated with each of the piston pumps 222 illustrated. While the illustrated embodiment may be advantageously used with this aspect of the invention, it should be recognized that this aspect of the invention may be readily practiced with different valve structures.

Specifically, the illustrated three-valve structure includes valves 280, 282, 284, each of which may be selectively switched between path A and path B. During a single cycle, for example, valve 280 may be connected to path A, after which the metering pump 220 may be activated to draw 2.5 mL of wash fluid from bulk supply 230 through hose 270 into the piston pumps 222. Valve 280 may then be switched to path B, valve 282 switched to path A, and valve 284 switched to path B, whereby the piston pumps 222 may then be operated to discharge the eight 2.5 mL units of wash fluid through the eight outlets of outlet set 284 into vessels 26 (not shown) located beneath those outlets.

When used with a processing zone 20, 22 in which there are six rows of eight reaction vessels 26 such as previously described, the above process may be repeated six times to provide the wash fluid to all forty-eight reaction vessels 26.

After the wash fluid has been discharged into all of the selected reaction vessels 26, operation of the valve structure can be changed to supply a different fluid if needed based on the testing being accomplished. For example, if SSLB fluid is thereafter desired, valve 280 positioned at path B, valve 282 positioned at path A, and valve 284 positioned at path A, whereby the piston pumps 222 may then be operated to draw 2.5 mL of SSLB fluid from bulk supply 232 through hose 272 into the piston pumps 222. Then, valve 280 may be kept at path B and valve 282 switched to path B, whereby the piston pumps 222 may then be operated to discharge the eight 2.5 mL units of SSLB fluid through the eight outlets of outlet set 284 into vessels 26 (not shown) located beneath those outlets. This processing may then be repeated as necessary to provide SSLB fluid to all of the selected reaction vessels 26.

It should be appreciated that the Fig. 8 aspect of the invention will enable the processing zones 20, 22 to be used efficiently and reliably. The desired amounts of fluid may be easily and reliably metered in the desired amounts. Further, this may be accomplished quickly, without the delay time which would be required by a dispensing head which travels back and forth from the processing zones and bulk supplies each time a set of reaction vessels requires such fluids.

It should also be appreciated that the various aspects of the invention described herein may be combined to provide a processing zone which may be advantageously operated to efficiently and quickly process samples.

Still other aspects, objects, and advantages of the present invention can be obtained from a study of the specification, the drawings, and the appended claims. It should be understood, however, that the present invention could be used in alternate forms where less than all of the objects and advantages of the present invention and preferred embodiment as described above would be obtained.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A processing zone for a specimen handling device, said processing zone comprising: a support (30, 32) for a plurality of reaction vessels (26) having drain openings (92) in their bottoms, said drain openings being adapted to support a selected head of fluid in said vessels; passages (80, 82) adapted to communicate with the bottom drain openings of supported reaction vessels; and a source of air at non-atmospheric pressure adapted to selectively drain fluid through the drain openings in supported reaction vessels, said support being adapted to support the plurality of reaction vessels in at least two rows, each row having a defined space from at least one adjacent row, **characterized in that** said defined space between rows comprises a generally vertical longitudinal slot (46, 48, 50); and further comprises a magnet (60, 62, 64) extending generally horizontally and supported for selected vertical movement in said slot.

2. The processing zone according to claim 1, **characterized in that** said source of air at non-atmospheric pressure is a vacuum source for drawing a vacuum in said passages.

3. The processing zone according to claim 1, further comprising a heater (42) for heating reaction vessels supported in said processing zone.

4. The processing zone according to claim 1, **characterized in that** said reaction vessels (26) are adapted to selectively contain fluids having a surface tension sufficient to support a selected head of fluid without the fluid draining through said drain openings (92), and said source of air at non-atmospheric pressure is adapted to selectively create a relatively lower pressure at the drain opening than at the top of the fluid to overcome said fluid surface tension and selectively drain the fluid through the drain openings.

5. The processing zone according to claim 1, **characterized in that** said support is adapted to support the plurality of reaction vessels (26) in at least four rows and said defined space comprises a genetically vertical longitudinal first slot (46) between the first and second rows and a generally vertical longitudinal second slot (48) between the third and fourth rows, and said magnet comprises a first bar magnet (60) supported for selected vertical movement in the first slot (46) and a second bar magnet (64) supported for selected vertical movement in the second slot (48).

6. The processing zone according to claim 5, **characterized in that** said first and second bar magnets (60, 64) are supported for vertical movement together.

7. A method of processing analytes in fluids in reaction vessels, comprising: supporting a reaction vessel (26) containing an analyte in a fluid, said reaction vessel having a drain opening (92) in its bottom capable of supporting a selected head of said fluid in said vessel by the surface tension of the fluid; drawing said analyte to a side of said vessel to concentrate said analyte clear of said drain opening; and selectively creating a pressure differential between the top of the fluid and the bottom of the drain opening sufficient to overcome said fluid surface tension and drain the fluid through the drain opening, wherein said drawing step comprises: binding said analyte to a magnetic particle, and introducing a magnetic field into said vessel which draws the magnetic particle and bound analyte to the side of the vessel.

8. The method according to claim 7, **characterized in that** said selectively creating a pressure differential step comprises selectively creating a vacuum beneath said drain opening.

9. The method according to claim 7, further comprising moving said magnetic field vertically along the height of said reaction vessel to draw said magnetic particles and bound analyte together into a pellet in said reaction vessel.

10. The method according to claim 9, **characterized in that** said moving step moves said magnetic field down from an upper position near the top of the fluid in the reaction vessel (26) to a position near the bottom of the reaction vessel whereby said pellet is formed near a bottom side of said reaction vessel (26).

## Patentansprüche

1. Eine Verarbeitungszone für eine Probenhandhabungsvorrichtung, wobei die Verarbeitungszone Folgendes umfasst: einen Träger (30, 32) für eine Vielzahl von Reaktionsgefäßen (26) mit Ablassöffnungen (92) in ihren Böden, wobei die Ablassöffnungen ausgebildet sind, um eine ausgewählte Flüssigkeitssäule in den Gefäßen zu tragen; Durchgänge (80, 82), die ausgebildet sind, um mit den Boden-Ablassöffnungen von getragenen Reaktionsgefäßen zu kommunizieren; und eine Quelle von Luft bei nicht atmosphärischem Druck, die ausgebildet ist, um Flüssigkeit selektiv durch die Ablassöffnungen in getragenen Reaktionsgefäßen abzulassen, wobei der Träger ausgebildet ist, um die Vielzahl von Reaktionsgefäßen in mindestens zwei Reihen zu tragen, wobei jede Reihe einen bestimmten Abstand von mindestens einer benachbarten Reihe hat, **dadurch gekennzeichnet, dass** der bestimmte Abstand zwischen Reihen einen allgemein vertikalen Längsschlitz (46, 48, 50) umfasst und weiter einen Magneten (60, 62, 64) umfasst, der sich allgemein horizontal erstreckt und zur ausgewählten vertikalen Bewegung in dem Schlitz getragen wird.

2. Die Verarbeitungszone gemäß Anspruch 1, **dadurch gekennzeichnet, dass** die Quelle für Luft bei nicht atmosphärischem Druck eine Vakuumquelle zum Ziehen eines Vakuums in die Durchgänge ist.

3. Die Verarbeitungszone gemäß Anspruch 1, die weiter eine Heizvorrichtung (42) zum Erhitzen von Reaktionsgefäßen umfasst, die in der Verarbeitungszone getragen werden.

4. Die Verarbeitungszone gemäß Anspruch 1, **dadurch gekennzeichnet, dass** die Reaktionsgefäße (26) ausgebildet sind, um selektiv Flüssigkeiten mit einer Oberflächenspannung zu enthalten, die ausreicht, um eine ausgewählte Flüssigkeitssäule zu tragen, ohne dass die Flüssigkeit durch die Ablassöffnungen (92) ausläuft, und dass die Quelle für Luft bei nicht atmosphärischem Druck ausgebildet ist, um selektiv einen relativ niedrigeren Druck an der Ablassöffnung zu erzeugen als an der Oberseite der Flüssigkeit, um die Flüssigkeits-Oberflächenspannung zu überwinden und um die Flüssigkeit selektiv durch die Ablassöffnungen abzulassen.

5. Die Verarbeitungszone gemäß Anspruch 1, **dadurch gekennzeichnet, dass** der Träger ausgebildet ist, um die Vielzahl von Reaktionsgefäßen (26) in mindestens vier Reihen zu tragen, und wobei der bestimmte Abstand einen allgemein vertikalen ersten Längsschlitz (46) zwischen der ersten und der zweiten Reihe und einen allgemein vertikalen zweiten Längsschlitz (48) zwischen der dritten und der vierten Reihe umfasst und der Magnet einen ersten Stabmagneten (60) umfasst, der zur ausgewählten vertikalen Bewegung im ersten Schlitz (46) getragen ist, und einen zweiten Stabmagneten (64) umfasst, zur ausgewählten vertikalen Bewegung im zweiten Schlitz (48) getragen ist.

6. Die Verarbeitungszone gemäß Anspruch 5, **dadurch gekennzeichnet, dass** der erste und der zweite Stabmagnet (60, 64) zur vertikalen Bewegung gemeinsam getragen werden.

7. Ein Verfahren zur Verarbeitung von Analyten in Flüssigkeiten in Reaktionsgefäßen, das Folgendes umfasst: Tragen eines Reaktionsgefäßes (26), das einen Analyten in einer Flüssigkeit enthält, wobei das Reaktionsgefäß eine Ablassöffnung (92) in seinem Boden hat, die in der Lage ist, durch die Oberflächenspannung der Flüssigkeit eine ausgewählte Säule der Flüssigkeit in dem Gefäß zu tragen; Ziehen des Analyten auf eine Seite des Gefäßes, um den Analyten fort von der Ablassöffnung zu konzentrieren, und selektives Erzeugen eines Druckunterschieds zwischen der Oberseite der Flüssigkeit und dem Boden der Ablassöffnung, der ausreicht, um die Flüssigkeits-Oberflächenspannung zu überwinden und die Flüssigkeit durch die Ablassöffnung abzulassen, worin der Schritt des Ziehens Folgendes umfasst: Binden des Analyten an ein magnetisches Teilchen und Einführen eines Magnetfelds in das Gefäß, welches das magnetische Teilchen und den gebundenen Analyten an die Seite des Gefäßes zieht.

8. Das Verfahren gemäß Anspruch 7, **dadurch gekennzeichnet, dass** der Schritt der selektiven Erzeugung eines Druckunterschieds die selektive Erzeugung eines Vakuums unterhalb der Ablassöffnung umfasst.

9. Das Verfahren gemäß Anspruch 7, das weiter Folgendes umfasst: Bewegung des Magnetfelds vertikal entlang der Höhe des Reaktionsgefäßes, um die magnetischen Teilchen und den gebundenen Analyten in dem Reaktionsgefäß zu einem Pellet zusammenzuziehen.

10. Das Verfahren gemäß Anspruch 9, **dadurch gekennzeichnet, dass** der Bewegungsschritt das Magnetfeld von einer oberen Position nahe der Oberseite der Flüssigkeit im Reaktionsgefäß (26) in eine Position nahe dem Boden des Reaktionsgefäßes bewegt, wodurch das Pellet nahe einer Unterseite des Reaktionsgefäßes (26) geformt wird.

## Revendications

1. Zone de traitement pour un dispositif de manipulation de spécimens, ladite zone de traitement comprenant : un support (30, 32) pour une pluralité de récipients de réaction (26) ayant des ouvertures de drainage (92) dans leurs fonds, lesdites ouvertures de drainage étant adaptées à supporter une colonne de fluide choisie dans lesdits réceptacles ; des passages (80, 82) adaptés à communiquer avec les ouvertures de drainage au fond des récipients de réaction supportés ; et une source d'air à pression non-atmosphérique adaptée à drainer du fluide de façon sélective à travers les ouvertures de drainage dans les récipients de réaction supportés, ledit support étant adapté à supporter la pluralité de récipients de réaction en au moins deux rangées, chaque rangée ayant un espace défini depuis au moins une rangée adjacente, **caractérisée en ce que** ledit espace défini entre rangées comprend une fente longitudinale généralement verticale (46, 48, 50) ; et comprend en outre un aimant (60, 62, 64) qui s'étend généralement horizontalement et supporté pour un mouvement vertical choisi dans ladite fente.

2. Zone de traitement selon la revendication 1, **caractérisée en ce que** ladite source d'air à pression non-atmosphérique est une source de vide pour attirer un vide dans lesdits passages.

3. Zone de traitement selon la revendication 1, comprenant en outre un dispositif de chauffage (42) pour chauffer des récipients de réaction supportés dans ladite zone de traitement.

4. Zone de traitement selon la revendication 1, **caractérisée en ce que** lesdits récipients de réaction (26) sont adaptés à contenir sélectivement des fluides ayant une tension superficielle suffisante pour supporter une colonne choisie de fluide sans que le fluide soit drainé à travers lesdites ouvertures de drainage (92), et ladite source d'air à pression non-atmosphérique est adaptée à engendrer sélectivement une pression relativement plus faible au niveau de l'ouverture de drainage par rapport au somment du fluide pour surmonter ladite tension superficielle et faire drainer sélectivement le fluide à travers les ouvertures de drainage.

5. Zone de traitement selon la revendication 1, **caractérisée en ce que** ledit support est adapté à supporter la pluralité de récipients de réaction (26) en au moins quatre rangées, et ledit espace défini comprend une première fente longitudinale généralement verticale (46) entre la première et la seconde rangée et une seconde fente longitudinale généralement verticale (48) entre la troisième et la quatrième rangée, et ledit aimant comprend un premier barreau magnétique (60) supporté pour un mouvement vertical choisi dans la première fente (46) et un second barreau magnétique (64) supporté pour un mouvement vertical choisi dans la seconde fente (48).

6. Zone de traitement selon la revendication 5, **caractérisée en ce que** ledit premier et ledit second barreau magnétique (60, 64) sont supportés pour un mouvement vertical ensemble.

7. Procédé de traitement d'analytes dans des fluides dans des récipients de réaction, comprenant les opérations consistant à : supporter un récipient de réaction (26) contenant un analyte dans un fluide, ledit récipient de réaction ayant une ouverture de drainage (92) dans son fond capable de supporter une colonne choisie dudit fluide dans ledit récipient grâce à la tension superficielle du fluide ; attirer ledit analyte vers un côté dudit récipient pour concentrer ledit analyte en dégagement de ladite ouverture de drainage ; et créer sélectivement une différentielle de pression entre le sommet du fluide et le fond de l'ouverture de drainage, suffisante pour surmonter ladite tension superficielle du fluide et faire drainer le fluide à travers l'ouverture de drainage, et dans lequel ladite étape d'aspiration comprend : la liaison dudit analyte à une particule magnétique et l'introduction d'un champ magnétique dans ledit récipient qui attire la particule magnétique et colle l'analyte sur le côté du récipient.

8. Procédé selon la revendication 7, **caractérisé en ce que** ladite opération consistant à créer sélectivement une différentielle de pression comprend la création sélective d'un vide au-dessous de ladite ouverture de drainage.

9. Procédé selon la revendication 7, comprenant en outre l'opération consistant à déplacer ledit champ magnétique verticalement le long de la hauteur dudit récipient de réaction pour attirer lesdites particules magnétiques et coller l'analyte ensemble en formant une pastille dans ledit récipient de réaction.

10. Procédé selon la revendication 9, **caractérisé en ce que** ladite opération de déplacement déplace ledit champ magnétique vers le bas depuis une position supérieure proche du sommet du fluide dans le récipient de réaction (26) vers une position proche du fond du récipient de réaction, grâce à quoi ladite pastille est formée à proximité d'un côté au fond dudit récipients de réaction (26).
